# FASCICULE DE BREVET EUROPEEN

(11) **EP 1 488 844 B1**
(45) Date de publication et mention de la délivrance du brevet: **11.02.2009**
(21) Numéro de dépôt: 04356092.9
(22) Date de dépôt: 09.06.2004
(51) Int. Cl.: B01D 53/18, B01D 53/14

(54) **Installation d'épuration de fumées par lavage et procédé de mise en oeuvre correspondant**
Anlage zur Reinigung von Rauchgasen durch Wäsche und Verfahren zum Betreiben desselben
Installation for purification of fumes by washing and operating method therefor

(30) Priorité: 10.06.2003 FR 0306991
(43) Date de publication de la demande: 22.12.2004
(73) Titulaire: LAB SA, 69006 Lyon (FR)
(72) Inventeur: Siret, Bernard, 69008 Lyon (FR)
(74) Mandataire: Schouller, Jean-Philippe

(56) Documents cités:
- DE-A- 2 740 039
- DE-A- 3 017 792

## Description

La présente invention concerne une installation d'épuration de fumées par lavage, ainsi qu'un procédé de mise en oeuvre de cette installation.

De nombreux procédés génèrent des fumées ou des effluents gazeux qui nécessitent un traitement avant de pouvoir être rejetés à l'atmosphère. Par exemple, on peut citer les fumées résultant d'une incinération de déchets, de la régénération des catalyseurs, de la combustion de charbon ou de fuel en vue de la production d'énergie.

Parmi les nombreux procédés offerts pour le traitement des fumées, les procédés humides occupent une place particulière. Dans ces procédés, le gaz est mis en contact après un conditionnement et un dépoussiérage éventuel avec un ou plusieurs liquides de lavage dans une ou plusieurs installations d'épuration par lavage, encore dénommées laveurs.

Quand les gaz contiennent des polluants tels que l'acide chlorhydrique, le dioxyde de soufre ou le mercure cette opération d'épuration par voie humide, dite lavage, est habituellement conduite en deux étapes. Le premier laveur, opéré à un pH normalement acide va capter les polluants comme l'acide chlorhydrique, l'acide fluorhydrique et une partie des métaux lourds, tandis que le second laveur, qui opère usuellement à un pH plus élevé que le premier, va capter plus particulièrement le dioxyde de soufre. Parfois, un troisième laveur suit.

Chacune de ces opérations, qui sont effectuées avec des solutions de lavage distinctes, nécessite un laveur séparé ce qui non seulement alourdit le coût de l'investissement initial, mais également occupe davantage d'espace au sol et en hauteur. De plus, afin de convenablement séparer les circuits hydrauliques entre les laveurs, on dispose souvent de séparateurs et/ou de dévésiculeurs entre les laveurs. Ceci accroît encore la complexité de l'installation. En effet, en sus des séparateurs et/ou dévésiculeurs eux-mêmes, de la tuyauterie supplémentaire pour les circuits de drains et de rinçage doit être installée, ainsi que de l'instrumentation.

Des intégrations verticales, plaçant un laveur au-dessus de l'autre ont été proposées. Cependant si on utilise deux technologies différentes comme un garnissage et des pulvérisateurs pour lesquelles les vitesses de passage des fumées sont assez différentes, ceci conduit à des agencements avec des sections de différents diamètres, assez hauts et coûteux à construire.

DE-A-2740039 décrit une installation comprenant toutes les caractéristiques du préambule de la revendication 1 annexée. La solution fournie par ce document implique cependant certains inconvénients.

En effet, cette installation ne permet pas de faire fonctionner les deux étages du laveur avec des chimies différentes, puisque les liquides pulvérisés par les moyens de lavage basique sont collectés dans un bac unique, de sorte qu'elles sont recyclées en amont, vers les moyens de lavage acide. En particulier, selon l'enseignement de ce document, il est impossible d'utiliser une chimie particulièrement oxydante dans l'étage acide, qui peut notamment être nécessaire pour la captation du mercure, puisque l'oxydant pulvérisé serait immédiatement détruit par le dioxyde de soufre capté dans l'étage alcalin.

Dans ces conditions, la présente invention a pour but de remédier à ces différents inconvénients.

A cet effet, elle a pour objet une installation conforme au libellé de la revendication 1.

D'autres caractéristiques avantageuses de l'invention font l'objet des sous-revendications.

L'invention a également pour objet un procédé pour la mise en oeuvre de cette installation, conforme au libellé de la revendication 10.

L'invention va être décrite ci-après, en référence aux dessins annexés, donnés uniquement à titre d'exemple non limitatif, dans lesquels :
- la figure 1 est une vue en coupe longitudinale d'une installation d'épuration de fumées, par lavage, qui est conforme à l'invention ;
- la figure 2 est une vue en coupe selon la ligne II-II à la figure 1, illustrant plus particulièrement le fond de l'installation de la figure 1 ; et
- la figure 3 est une vue en coupe longitudinale, analogue à la figure 1, mettant plus particulièrement en évidence les différentes zones fonctionnelles de l'installation d'épuration des figures précédentes.

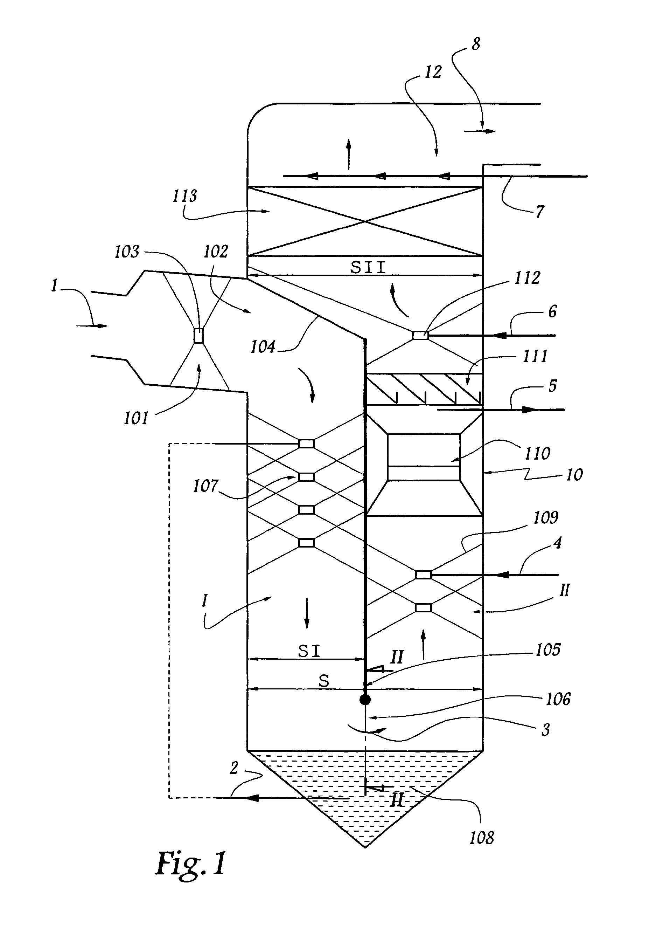

Comme le montre notamment la figure 1, les fumées à épurer (1) sont introduites dans une ouverture latérale (102), formant entrée de l'installation d'épuration, ou laveur. Celui-ci comporte une enveloppe externe (10), de forme allongée, qui présente une section globalement constante, par exemple circulaire.

Les fumées sont admises dans l'entrée (102) après éventuellement une étape de trempe dans un quench (101) à pulvérisateurs (103). Cette étape de trempe est optionnelle et les fumées peuvent être introduites directement dans le laveur par l'entrée latérale (102).

Les fumées sont ensuite dirigées vers le bas du laveur par des parois respectivement oblique (104) et verticale (105). La paroi verticale (105) divise le laveur fonctionnellement en deux régions de circulation des fumées, respectivement descendante (I) et ascendante (II). La section transversale (SI) de la région descendante (I) occupe entre 25 et 60%, de préférence entre 30 et 50%, de la section totale (S) du laveur.

Lors de leur trajet descendant, les fumées sont mises en contact avec un premier liquide de lavage par le biais de premiers moyens de mise en contact (107), représentés sur la figure 1 comme des pulvérisateurs, mais pouvant également être un garnissage. Le liquide de lavage (2), provenant du fond (108) du laveur, directement ou par le biais de bacs intermédiaires, est dirigé vers ces moyens de mise en contact (107) par des pompes ou tout autre moyen non représenté ici.

Vers le bas du laveur, la paroi verticale (105) est interrompue ou découpée et, par l'ouverture (106) ainsi réalisée, les fumées (3), déjà partiellement épurées, effectuent un demi-tour dans le laveur. Elles passent alors de l'autre côté de la plaque (105) et sont dirigées vers la région ascendante (II).

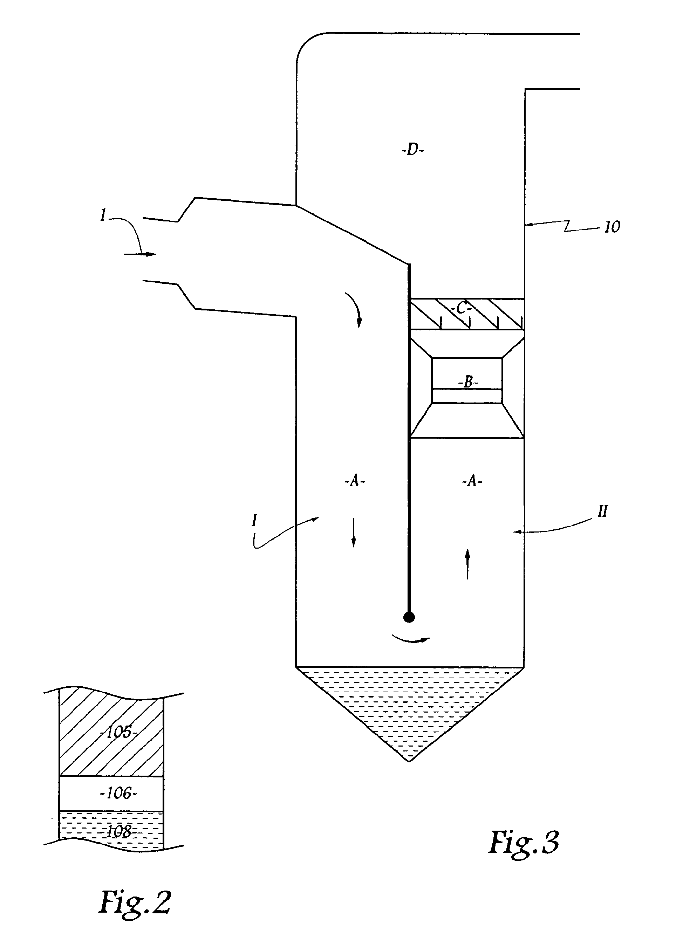

L'ouverture (106) peut, à titre d'exemple, être délimitée par l'arête supérieure de la plaque (105) et le niveau de liquide maintenu dans le fond (108) du laveur, comme illustré à la figure 2. Cette disposition est d'ailleurs la variante préférée d'exécution car elle permet d'assurer aux fumées partiellement épurées (3) un contact supplémentaire avec le liquide (2), au niveau de la surface libre de ce liquide présent dans le fond du laveur (108).

Les fumées poursuivent alors leur épuration dans un mouvement ascendant, en amont de la région ascendante (II), où elles sont mises en contact de manière optionnelle avec un liquide de lavage supplémentaire (4), provenant aussi pour tout ou partie du fond du laveur (108). Un appoint d'eau, non représenté, est réalisé dans le laveur pour compenser si nécessaire des pertes liées à l'évaporation.

Le liquide supplémentaire (4) est sensiblement analogue au premier liquide (2), en ce sens qu'il a sensiblement la même composition que ce liquide (2) mais qu'il peut également contenir des additifs ou de l'eau d'appoint. Les fumées traversent alors un premier moyen de séparation, à savoir un dévésiculeur (110) dont la fonction est d'éviter une contamination des étages supérieurs par le premier liquide de lavage entraîné par les fumées.

Ce dévésiculeur (110) peut être, par exemple, un séparateur à chevrons à un ou deux étages. Les liquides collectés par ce séparateur (110) sont, de manière non représentée sur la figure 1, retournés vers le fond (108) du laveur. Il est à noter que, puisque le gaz progresse selon un mouvement ascendant et que les séparateurs (110) sont intégrés dans le laveur, aucun circuit particulier peut n'être nécessaire pour retourner les liquides collectés vers (108), l'action de la gravité se révélant suffisante.

A ce stade, dans le cas de fumées (1) contenant à la fois du dioxyde de soufre et de l'acide chlorhydrique, les fumées ont été débarrassées par exemple de plus de 90% de l'acide chlorhydrique initialement contenu, mais conservent encore une fraction significative, par exemple supérieure à 40%, du dioxyde de soufre initialement contenu dans (1). Les fumées entrent alors dans des zones du laveur qui sont fonctionnellement équivalentes à ce que serait un second laveur séparé, dans une configuration plus classique à deux laveurs.

Les fumées, dans leur mouvement vertical ascendant, traversent un second moyen de séparation, qui est un collecteur de liquide (111) dont la fonction est de récupérer le liquide de lavage utilisé dans la section supérieure, pour que ce dernier ne contamine pas le liquide contenu dans (108). Ces liquides collectés par la ligne (5) sont dirigés vers un bac externe non représenté, en vue d'être neutralisés et réinjectés par les lignes (6) et/ou (7) dans le laveur.

Les fumées sont mises en contact avec un second liquide de lavage, différent du premier. Cette opération est réalisée grâce successivement à des contacteurs (112) et (113). Ces derniers, qui sont destinés à mettre en contact le second liquide de lavage et les fumées, peuvent être par exemple de type à pulvérisateurs ou à garnissage. Il est possible, selon l'application, de n'utiliser que l'un ou l'autre de ces contacteurs (112) et (113), ou bien les deux.

Avant de traverser la zone où la dernière phase de l'épuration se fait dans ce laveur, la section (SII) de la région ascendante (I) s'agrandit, en regard de l'entrée (102), jusqu'à occuper la totalité de la section du laveur, du fait de la présence de la paroi oblique (104). La section d'épuration finale, s'étendant au voisinage des contacteurs (113), occupe donc la totalité de la section du laveur.

L'exemple de la figure 1 représente successivement un ensemble de pulvérisation (112) et un garnissage (113). Ces contacteurs (112) et (113) reçoivent du liquide de lavage par les lignes (6) et (7), provenant d'un bac externe non représenté où s'effectue la neutralisation et l'ajout optionnel d'additifs. Les fumées épurées (8) sont évacuées du laveur par une sortie supérieure (12) et peuvent, par exemple, aller vers une cheminée après un dévésiculage final par le biais d'un ventilateur, ou bien être soumises à un traitement complémentaire.

La figure 3 explique encore l'invention en montrant les différentes zones fonctionnelles du laveur.

Dans la zone (A), où les fumées sont successivement descendantes puis ascendantes, la première étape de lavage se fait. La zone (B), où sont placés les premiers moyens de séparation (110), sert à séparer la zone (D) de la zone (A) et à éviter ainsi que le premier liquide de lavage ne soit dirigé vers cette zone (D). La zone (C) est la zone du collecteur (111), qui récupère le second liquide ayant servi au lavage dans (D), et évite ainsi que ce second liquide ne soit dirigé vers la zone (A). La zone (D) assure enfin la seconde étape de lavage.

A titre d'exemple, une fumée d'incinération (1) contenant du dioxyde de soufre et de l'acide chlorhydrique verrait l'acide chlorhydrique être lavé dans la zone (A), alors que la zone (D) servirait à capter le dioxyde de soufre non capté dans (A). Dans un tel exemple, le pH des solutions de lavage dans (A) serait compris entre 0 et 2.5, alors que le pH des solutions de lavage dans (D) serait compris entre 4 et 10, de préférence entre 5 et 8. Fonctionnellement, la zone (A) correspondrait, dans une approche traditionnelle à deux laveurs séparés, au laveur acide alors que la zone (D) correspondrait au laveur neutre ou alcalin.

La vitesse des fumées, dans la région descendante (I), est avantageusement comprise entre 2.5 et 10 m/s. Par ailleurs, la vitesse de ces fumées est avantageusement comprise entre 2 et 6 m/s au niveau de l'amont de la seconde région (II), à savoir jusqu'au collecteur (111).

En effet, en aval de celui-ci, la vitesse de ces fumées diminue, étant donné que la section transversale de la région (II) augmente. Une telle mesure est avantageuse, puisque le temps de séjour des fumées dans le garnissage (113) se trouve augmenté.

On notera que l'invention est tout particulièrement avantageuse, par comparaison avec l'enseignement de DE-A-2740039.

En effet, dans l'installation de l'invention, les seconds moyens de séparation 111 récupèrent l'intégralité des liquides pulvérisés dans la zone (D), qui sont soutirés par la ligne 5. Ces liquides ne sont donc pas mélangés avec les liquides acides, pulvérisés dans la zone (A), contrairement à ce qui prévaut dans le document allemand.

Ceci permet en particulier d'obtenir des conditions d'oxydo-réduction très différentes entre les zones (A) et (D), ou encore de mettre en service dans la zone (D) des solides pulvérulents, tels que du charbon actif, sans que ces solides ne s'échappent en direction de la zone (A), ce qui serait désavantageux en termes économiques.

## Revendications

1. Installation d'épuration de fumées par lavage, comprenant :
- une enveloppe (10) dans laquelle sont respectivement ménagées une entrée (102) des fumées à épurer et une sortie (12) des fumées épurées ;
- des moyens de séparation (104, 105) définissant, au sein de l'enveloppe (10), une première région (I) de circulation des fumées, débouchant dans l'entrée (102), au sein de laquelle les fumées sont destinées à s'écouler de façon descendante, ainsi qu'une seconde région (II) de circulation des fumées, débouchant dans la sortie (12), au sein de laquelle les fumées sont destinées à s'écouler de façon ascendante, ces deux régions (I, II) s'étendant de part et d'autre des moyens de séparation (104 ; 105) ;
- un passage (106) ménagé dans la partie basse de l'enveloppe (10), assurant la mise en communication mutuelle des deux régions (I, II) ;
- des premiers moyens (107) de mise en contact d'un premier liquide de lavage avec les fumées, prévus dans la première région (I) ;
- des premiers moyens de séparation (110), aptes à retenir l'entraînement du premier liquide de lavage dans les fumées, qui sont prévus dans la seconde région (II) ;
**caractérisée en ce qu'**elle comprend en outre :
- des seconds moyens (112, 113) de mise en contact d'un second liquide de lavage, distinct dudit premier liquide de lavage, avec les fumées, qui sont prévus dans la seconde région (II), en aval des premiers moyens de séparation (110) ; et
- des seconds moyens de séparation (111), interposés entre les premiers moyens de séparation (110) et les seconds moyens de mise en contact (112, 113), ces seconds moyens de séparation (111) étant aptes à collecter le second liquide de lavage, de manière à empêcher ce dernier de retomber vers un fond (108) de l'installation.

2. Installation selon la revendication 1, **caractérisée en ce que** la première région (I), délimitée par les moyens de séparation (104, 105), présente une section transversale (SI) qui représente entre 25 et 60%, de préférence entre 30 et 50%, de la section totale (S) de l'enveloppe (10).

3. Installation selon l'une quelconque des revendications précédentes, **caractérisée en ce qu'**il est en outre prévu des moyens (109) de mise en contact des fumées avec un liquide de lavage supplémentaire, analogue au premier liquide de lavage, qui sont prévus dans la seconde région (II), en amont des premiers moyens de séparation (110).

4. Installation selon l'une quelconque des revendications précédentes, **caractérisée en ce que** le passage (106) est délimité par une extrémité inférieure des moyens de séparation (104, 105).

5. Installation selon l'une quelconque des revendications précédentes, **caractérisé en ce que** l'entrée (102) est ménagée latéralement dans l'enveloppe (10).

6. Installation selon la revendication 5, **caractérisée en ce que** la première région (I) s'étend uniquement sur une partie de la hauteur de l'enveloppe (10), la section transversale (SII) de la seconde région (II) augmentant vers le haut, jusqu'à atteindre la totalité de la section transversale de l'enveloppe (10).

7. Installation selon l'une quelconque des revendications précédentes, **caractérisée en ce que** les moyens de séparation comprennent une paroi oblique (104), s'étendant à la fois vers le bas et vers l'intérieur de l'enveloppe (10) depuis l'entrée (102), ainsi qu'une paroi verticale (105) s'étendant vers le bas depuis l'extrémité inférieure de la paroi oblique (104).

8. Installation selon l'une quelconque des revendications précédentes, **caractérisée en ce que** les premiers moyens de séparation comprennent un dévésiculeur à chevrons (110) à un ou deux étages.

9. Installation selon l'une quelconque des revendications précédentes, **caractérisée en ce que** les seconds moyens de séparation comprennent un collecteur à plaques inclinées (111).

10. Procédé de mise en oeuvre de l'installation d'épuration des fumées selon l'une quelconque des revendications précédentes, **caractérisé en ce qu'**on admet les fumées par l'entrée (102), on les dirige vers le bas le long de la première région (I), à une vitesse comprise entre 2.5 et 10 m/s, on les admet au travers du passage (106), puis on les fait circuler vers le haut au sein de la seconde région (II), à une vitesse comprise entre 2 et 6 m/s au moins en amont de cette seconde région (II).

11. Procédé selon la revendication 10, **caractérisé en ce qu'**on récupère par gravité le premier liquide de lavage au niveau d'un fond (108) de l'enveloppe (10).

## Claims

1. A wet fume scrubbing installation comprising:
- a casing (10) in which are respectively formed an inlet (102) for fumes to be scrubbed and an outlet (12) for the scrubbed fumes;
- separation means (104, 105) defining, within the casing (10), a first fume circulation region (I) opening into the inlet (102), within which the fumes are intended to flow downwards, together with a second fume circulation region (II), opening into the outlet (12), within which the fumes are intended to flow upwards, these two regions (I, II) extending on either side of the separation means (104; 105);
- a passage (106) formed in the low part of the casing (10) ensuring mutual communication between the two regions (I, II);
- first means (107) for contacting a first scrubbing liquid with the fumes, said means being provided in the first region (I);
- first separation means (110), capable of holding back entrainment of the first scrubbing liquid into the fumes, said means being provided in the second region (II);
**characterised in that** the installation furthermore comprises:
- second means (112, 113) for contacting a second scrubbing liquid, which differs from said first scrubbing liquid, with the fumes, said means being provided in the second region (II), downstream of the first separation means (110); and
- second separation means (111), interposed between the first separation means (110) and the second contacting means (112, 113), said second separation means (111) being capable of collecting the second scrubbing liquid, so as to prevent the latter from falling down towards the bottom (108) of the installation.

2. An installation according to claim 1, **characterised in that** the first region (I), defined by the separation means (104, 105), exhibits a cross-section (SI) which amounts to between 25 and 60%, preferably between 30 and 50%, of the total section (S) of the casing (10).

3. An installation according to either one of the preceding claims, **characterised in that** means (109) are furthermore provided for contacting fumes with an additional scrubbing liquid, which is similar to the first scrubbing liquid, said means being provided in the second region (II), upstream of the first separation means (110).

4. An installation according to any one of the preceding claims, **characterised in that** the passage (106) is defined by a lower end of the separation means (104, 105).

5. An installation according to any one of the preceding claims, **characterised in that** the inlet (102) is formed laterally in the casing (10).

6. An installation according to claim 5, **characterised in that** the first region (I) extends over only part of the height of the casing (10), the cross-section (SII) of the second region (II) increasing towards the top until it accounts for the entire cross-section of the casing (10).

7. An installation according to any one of the preceding claims, **characterised in that** the separation means comprise an oblique wall (104), extending both downwards and towards the interior of the casing (10) from the inlet (102), together with a vertical wall (105) extending downwards from the lower end of the oblique wall (104).

8. An installation according to any one of the preceding claims, **characterised in that** the first separation means comprise a one- or two-stage chevron mist eliminator (110).

9. An installation according to any one of the preceding claims, **characterised in that** the second separation means comprise an inclined plate collector (111).

10. A method for implementing the fume scrubbing installation according to any one of the preceding claims, **characterised in that** the fumes are admitted through the inlet (102), they are directed downwards along the first region (I), at a velocity of between 2.5 and 10 m/s, they are admitted through the passage (106) and they are then circulated within the second region (II), at a velocity of between 2 and 6 m/s at least upstream of said second region (II).

11. A method according to claim 10, **characterised in that** the first scrubbing liquid is recovered by gravity at the bottom (108) of the casing (10).

## Patentansprüche

1. Vorrichtung zur Rauchgasreinigung durch Waschen, umfassend:
- eine Hülle (10), in welcher ein Einlass (102) für zu reinigende Rauchgase und ein Auslass (12) für gereinigte Rauchgase ausgespart sind;
- Mittel zum Trennen (104, 105), die innerhalb der Hülle (10) einen ersten, im Einlass (102) mündenden Rauchgasströmungsbereich (I), innerhalb dessen die Rauchgase absteigend strömen sollen, sowie einen zweiten, im Ausgang (12) mündenden Rauchgasströmungsbereich (II), innerhalb dessen die Rauchgase aufsteigend strömen sollen, definieren, wobei sich diese zwei Bereiche (I, II) zu beiden Seiten der Mittel zum Trennen (104; 105) erstrecken;
- ein im unteren Teil der Hülle (10) ausgesparter Durchlass (106), der die Verbindung der zwei Bereiche (I, II) sicherstellt;
- erste Mittel zum In-Kontakt-Bringen (107) einer ersten Waschflüssigkeit mit den Rauchgasen, die im ersten Bereich (I) vorgesehen sind;
- erste Mittel zum Trennen (110), die mitgerissene Waschflüssigkeit in den Rauchgasen zurückhalten können und die im zweiten Bereich (II) vorgesehen sind;
**dadurch gekennzeichnet, dass** sie außerdem umfasst:
- zweite Mittel zum In-Kontakt-Bringen (112, 113) einer zweiten, von der ersten Waschflüssigkeit verschiedenen Waschflüssigkeit mit den Rauchgasen, die im zweiten Bereich (II) vorgesehen sind, stromabwärts der ersten Mittel zum Trennen (110); und
- zweite Mittel zum Trennen (111), die zwischen den ersten Mitteln zum Trennen (110) und den zweiten Mitteln zum In-Kontakt-Bringen (112, 113) vorgesehen sind, wobei diese zweiten Mittel zum Trennen (111) die zweite Waschflüssigkeit sammeln können, sodass verhindert wird, dass die letztere gegen einen Boden (108) der Vorrichtung fällt.

2. Vorrichtung nach Anspruch 1, **dadurch gekennzeichnet, dass** der erste Bereich (I), begrenzt von den Mitteln zum Trennen (104, 105), einen Querschnitt (SI) hat, der zwischen 25 und 60%, vorzugsweise zwischen 30 und 50% des gesamten Querschnitts (S) der Hülle (10) beträgt.

3. Vorrichtung nach einem der vorhergehenden Ansprüche, **dadurch gekennzeichnet, dass** weiters Mittel (109) zum In-Kontakt-Bringen der Rauchgase mit einer zusätzlichen, der ersten Waschflüssigkeit entsprechenden Waschflüssigkeit vorgesehen sind, die im zweiten Bereich (II) vorgesehen sind, stromaufwärts der ersten Mittel zum Trennen (110).

4. Vorrichtung nach einem der vorhergehenden Ansprüche, **dadurch gekennzeichnet, dass** der Durchlass (106) von einem unteren Rand der Mittel zum Trennen (104, 105) begrenzt ist.

5. Vorrichtung nach einem der vorhergehenden Ansprüche, **dadurch gekennzeichnet, dass** der Einlass (102) seitlich in der Hülle (10) ausgespart ist.

6. Vorrichtung nach Anspruch 5, **dadurch gekennzeichnet, dass** sich der erste Bereich (I) nur über einen Teil der Höhe der Hülle (10) erstreckt, wobei sich der Querschnitt (SII) des zweiten Bereichs (II) nach oben vergrößert, bis er den gesamten Querschnitt der Hülle (10) erreicht.

7. Vorrichtung nach einem der vorhergehenden Ansprüche, **dadurch gekennzeichnet, dass** die Mittel zum Trennen eine schräge Wand (104), die sich gleichzeitig nach unten und gegen das Innere der Hülle (10) vom Einlass (102) weg erstreckt, sowie eine senkrechte Wand (105), die sich vom unteren Ende der schrägen Wand (104) nach unten erstreckt, umfassen.

8. Vorrichtung nach einem der vorhergehenden Ansprüche, **dadurch gekennzeichnet, dass** die ersten Mittel zum Trennen einen Lamellen-Tröpfchenabscheider (110) in einer oder zwei Ebenen umfassen.

9. Vorrichtung nach einem der vorhergehenden Ansprüche, **dadurch gekennzeichnet, dass** die zweiten Mittel zum Trennen einen Abscheider mit geneigten Platten (111) umfassen.

10. Verfahren zum Betreiben der Vorrichtung zur Rauchgasreinigung nach einem der vorhergehenden Ansprüche, **dadurch gekennzeichnet, dass** man die Rauchgase über den Einlass (102) zuführt, man sie entlang des ersten Bereichs (I) mit einer Geschwindigkeit zwischen 2,5 und 10 m/s nach unten leitet, dass man sie dann durch den Durchlass (106) durchführt und man sie dann innerhalb des zweiten Bereichs (II) mit einer Geschwindigkeit zwischen 2 und 6 m/s zumindest oberhalb dieses zweiten Bereichs (II) nach oben strömen lässt.

11. Verfahren nach Anspruch 10, **dadurch gekennzeichnet, dass** man durch Schwerkraft die erste Waschflüssigkeit auf Höhe eines Bodens (108) der Hülle (10) zurückgewinnt.
